# EUROPÄISCHE PATENTSCHRIFT

(11) **EP 2 890 933 B1**
(45) Veröffentlichungstag und Bekanntmachung des Hinweises auf die Patenterteilung: **28.12.2016**
(21) Anmeldenummer: 13759154.1
(22) Anmeldetag: 27.08.2013
(51) Int. Cl.: F23J 1/06, F27D 25/00

(54) **VERFAHREN UND Müllverbrennungsanlage mit einer VORRICHTUNG ZUR ABSCHEIDUNG VON FEINKORNANTEILEN AUS DER SCHLACKE DER MÜLLVERBRENNUNGSANLAGE**
METHOD AND WASTE INCINERATION PLANT WITH DEVICE FOR SEPARATING FINE-GRAINED FRACTIONS FROM THE CINDERS OF SAID WASTE INCINERATION PLANT
PROCÉDÉ ET USINE D'INCINÉRATION DES ORDURES MÉNAGÈRES AVEC DISPOSITIF PERMETTANT DE SÉPARER DES FRACTIONS DE PARTICULES FINES PRÉSENTES DANS LES SCORIES DE LA DITE USINE D'INCINÉRATION

(30) Priorität: 28.08.2012 CH 14972012
(43) Veröffentlichungstag der Anmeldung: 08.07.2015
(73) Patentinhaber: Doikos Investments, Ltd., St. Helier Jersey JE4 8TZ (GB)
(72) Erfinder: BUNGE, Rainer, CH-8849 Alpthal (CH); STIEFEL, Martin, CH-8626 Ottikon (CH)
(74) Vertreter: Felber, Josef
(86) Internationale Anmeldenummer: PCT/EP2013/067725
(87) Internationale Veröffentlichungsnummer: WO 2014/033128

(56) Entgegenhaltungen:
- EP-A1- 2 375 153
- WO-A1-02/086388
- DE-A1- 1 526 076
- JP-A- 2004 163 034

## Beschreibung

Die Erfindung betrifft ein Verfahren und eine Müllverbrennungsanlage mit einer Vorrichtung zur Abscheidung von Feinkornanteilen aus der Schlacke (= Rostasche) einer Müllverbrennungsanlage, einerseits um die Schlackenqualität im Hinblick auf eine Weiterverwendung im Baubereich zu verbessern, andrerseits um werthaltige Fraktionen aus der Schlacke zurückzugewinnen.

In modernen Müllverbrennungsanlagen wird der Müll auf Stufenrosten verbrannt, und am Schluss der Verbrennung bleibt nur noch Asche und ausgebrannte Schlacke übrig. Diese Aschen und Schlacken werden am Ende des Verbrennungsrostes über eine Abwurfkante in einen oder mehrere Schlackentrichter abgeworfen. Der Schlackentrichter mündet in einen Schlackenschacht, der wiederum in einen Nassentschlacker oder Trockenentschlacker mündet. Im Fall eines Nassentschlacker ist dieser ein mit Wasser gefüllter U-förmiger Syphon, in dessen einen Schenkel die Schlacke vom Verbrennungsrost in das Wasserbad herabfällt. Mittels einer mechanischen Austragsvorrichtung wird diese Schlacke dann durch den anderen Schenkel aus dem Wasserbad heraustransportiert. Mit dem Wasserbad wird verhindert, dass durch den Entschlacker Falschluft in den unter Unterdruck stehenden Ofen gesaugt wird, was Probleme mit einer ordnungsgemässen Feuerführung zur Folge hätte. Bei einem Trockenaustrag wird versucht, ein Einziehen von Falschluft tunlichst zu vermeiden, was jedoch nie ganz zufriedenstellend möglich ist.

Problematisch ist, dass sich durch den Kontakt mit dem Wasser die Qualität der Schlacke punkto wasserlöslicher Schwermetalle stark verschlechtert, was auch der Fall ist, wenn trocken ausgetragene Schlacke nach dem Deponieren beregnet wird. Im Feinkornanteil dieser Schlacke befinden sich nämlich Anteile von leicht wasserlöslichen Schwermetallsalzen, die sich im Wasser auflösen. Diese gelösten Schwermetalle werden im Wasserbad durch zwei Mechanismen auf die gröberen Schlackenpartikeln transferiert: Einerseits gelangen die gelösten Schwermetalle mit der an den Grobkornfraktionen haftenden Materialfeuchte in die ausgetragene Schlacke. Andererseits spielt auch eine Adsorption der Schwermetalle, insbesondere an Eisenoxidoberflächen, eine Rolle. Durch den Kontakt mit dem Wasserbad wird also eine unbeabsichtigte Umlagerung der in Form leicht wasserlöslicher Verbindungen vorliegenden Schwermetalle von den Feinkornfraktionen der Asche in die Grobkornfraktionen bewirkt. Dies führt dazu, dass die aus dem Nassentschlacker ausgetragene Schlacke wie auch die trocken ausgetragene Schlacke erhebliche wasserlösliche Schwermetallgehalte aufweist und daher für die Verwertung als Baumaterial nur sehr eingeschränkt einsetzbar ist. Nachteilig ist ausserdem, dass der Eisenschrott durch die oben angesprochenen Adsorptionsmechanismen mit Schwermetallen kontaminiert wird und daher von schlechter chemischer Qualität ist.

Die Aschen und Schlacken enthalten ausserdem verschiedenste Wertstoffe wie Eisen- und Nichteisen-Metalle. Insbesondere die Feinfraktion von bspw. < 1-2 mm enthält einen hohen Anteil solcher Wertstoffe. Ein zweiter nachteiliger Effekt des Wasserbades der Schlacke ist darin zu sehen, dass diese Wertstoffe infolge chemischer Prozesse erstens korrosiv angegriffen werden, und zweitens mit der Schlacke verloren gehen. Dies vor allem deshalb, weil die mineralischen Bestandteile der Schlacke nach der Befeuchtung abbinden und die Metallteilchen in eine zementähnliche Schlackenmatrix einschliessen. Weil die Preise von gewissen Metallen in den letzten Jahren erheblich gestiegen sind, ist in der einschlägigen Branche vermehrt der Wunsch auszumachen, diese Metalle effizient zu rezyklieren. Das Rückgewinnen der Metalle aus der Schlacke oder spezifisch dieser Feinfraktion gestaltet sich aber nach einer Benetzung in einem Wasserbad als besonders schwierig.

Zur Lösung der dieser Probleme gibt es bisher im Wesentlichen zwei Ansätze. Einerseits wurde versucht, die Schlacke direkt im Entschlacker oder kurz danach zu waschen und so die leichtlöslichen Schwermetalle fortzuspülen. Dies erfordert eine aufwändige Abwasserreinigung vor Ort, was in der Regel auf dem Betriebsgelände von Müllverbrennungsanlagen nicht praktikabel ist. Ausserdem ist der Reinigungserfolg im Falle von adsorbierten Schwermetallen unbefriedigend. Der zweite Lösungsansatz zielt darauf ab, die Schlacke nicht durch ein Wasserbad, sondern trocken auszutragen. Die mit leicht wasserlöslichen Schwermetallen angereicherten Feinkornfraktionen werden dann nach dem Austrag aus dem Ofen von den gröberen Kornfraktionen abgetrennt, z.B. durch Sichtung oder Siebung. Die so entstaubten Grobkornfraktionen weisen dann einen deutlich niedrigeren Gehalt an wasserlöslichen Schwermetallen auf als die ursprünglich ausgetragene Schlacke insgesamt. Problematisch ist beim Trockenaustrag aber, abgesehen von der Staubbildung, der luftdichte Abschluss des Verbrennungsofens. Der durch den Trockenentschlacker einziehende Falschluftstrom muss daher durch verschiedene Vorkehrungen minimiert werden, um die ordnungsgemässe Feuerführung im Ofen nicht zu beeinträchtigen. Als unbeabsichtigter positiver Nebeneffekt schleppt die einziehende Falschluft Feinstkornanteile der Schlacke ins Ofeninnere und transferiert diese in die Filterasche, welche in der mechanischen Rauchgasreinigung abgeschieden wird.

Die Aufgabe der vorliegenden Erfindung ist es deshalb, ein Verfahren und eine Vorrichtung zu finden, welche die Schlacke in einer Form ausbringen, in der die Metalle daraus extrahiert sind und die mineralische Fraktion deshalb als Baumaterial verwertet werden kann, ohne jedoch die oben genannten Probleme mit der Schlackenwäsche und dem Falschlufteintrag beim Trockenaustrag in Kauf nehmen zu müssen.

Diese Aufgabe wird gelöst von einem Verfahren zur Abscheidung von Feinkornanteilen aus der Schlacke einer Müllverbrennungsanlage nach Anspruch 1.

Die Aufgabe wird des Weiteren gelöst durch eine Müllverbrennungsanlage mit einer Vorrichtung zur Abscheidung von Feinkornanteilen aus der Schlacke dieser Müllverbrennungsanlage nach Anspruch 9.

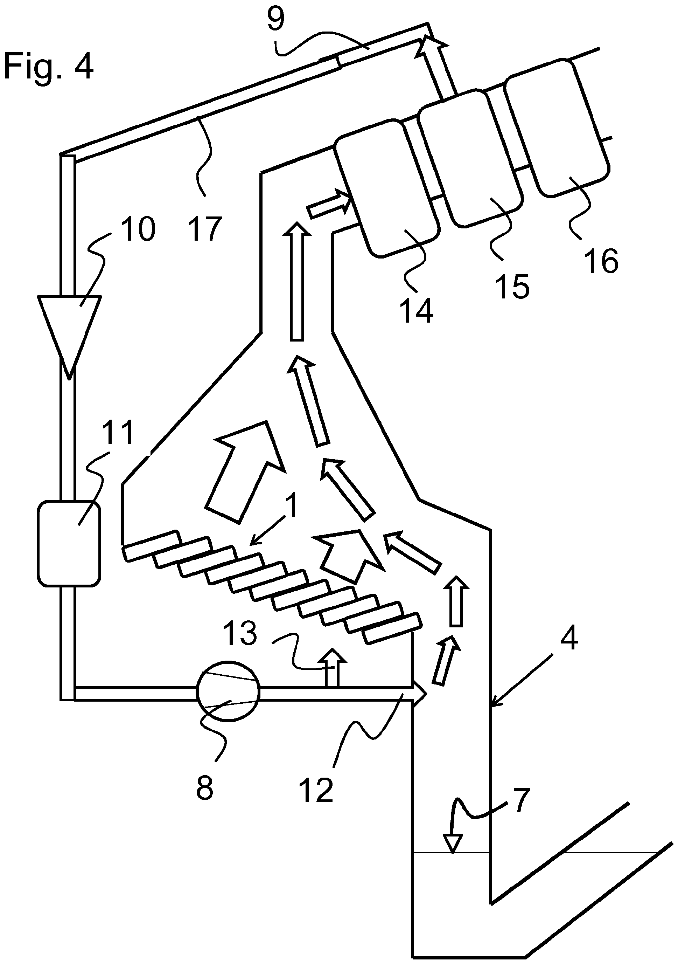

Aus der WO02/086388 ist eine Vorrichtung bekannt, welche mit einem gesondert induzierten Gasstrom im Schlacken-Fallschacht arbeitet, welcher auf den ersten Blick dieselbe Anordnung zu offenbaren scheint. Der Gasstrom dient aber allein dazu, den Schlackenablauf (Fig. 4, 206) heiss zu halten, indem mit einem Sperrgasumlauf ein Aufsteigen des kalten Gases aus dem unten angeordneten Wasserbad unterbunden wird (Seite 10 Zeile 16-30). Wie auf Seite 11 Zeile 25 von WO02/086388 ausgeführt, dient der Staub-Sammler (dust collector (214)) allein zum Schutz des Lüfters (215). Man wird also versuchen, die Ansaugöffnung (suction port (211)) so anzubringen, dass möglichst wenig Staub mit dem abgesaugten Gas mitgerissen wird. Entsprechend wird in Vorrichtung nach WO02/086388 der umlaufende Gasstrom im Gleichstrom mit dem Schlackenstrom von oben nach unten geleitet, wobei eine Durchströmung der Schlacke mittels des umlaufenden Gasstromes tunlichst vermieden wird, indem die Luft an einer bestimmten Wand (211) abgesaugt wird und auch gezielt an der gleichen Wand der Vorrichtung wieder eingeblasen wird (212). Die in Figur 4 von WO02/086388 skizzierte Vorrichtung ist deshalb weder dazu gedacht, die herabfallende Asche zu entstauben, noch ist sie dazu überhaupt geeignet. Weil möglichst wenig Staub mitgerissen werden soll, führt dieses Dokument eher noch von der zugrundeliegenden Idee der hier vorliegenden Erfindung weg. Kern dieser Erfindung ist nämlich, dass der Gasstrom durch die Schlacke hindurch geleitet wird, um die darin befindlichen Feinkornanteile herauszutragen. Dieses Heraustragen erfolgt vorteilhaft aber nicht zwingend mittels einer Quer- oder Gegenstromkomponente im allgemeinen Fallstrom der Schlacke.

In den Figuren sind Ausführungsbeispiele der hier vorgestellten Vorrichtung gezeigt und es wird das Verfahren nachfolgend anhand dieser Figuren beschrieben und seine Funktion wird erklärt.

Es zeigt:
- Fig. 1:: einen Längsschnitt durch einen Verbrennungsrost mit anschliessendem Schlacken-Fallschacht, Schlackenfänger und Ausstosser sowie Schlackenförderer für einen Nassaustrag der Schlacke;
- Fig. 2:: einen Ausschnitt aus dem Längsschnitt von Figur 1, nämlich den Endbereich des Verbrennungsrostes sowie den Schlacken-Fallschacht mit Schlackenfänger, jedoch mit einer installierten Staubpartikel-Abscheide-Vorrichtung um den Schlacken-Fallschacht;
- Fig. 3:: eine schematische Darstellung einer Anlage, bei welcher der Gasstrom quer in den Schlackenkanal eingedüst wird, und hernach die Feinkorn-Teilchen der Rostschlacke mit dem Rauchgas nach oben ausgetragen werden, wobei ein gleicher Gasstrom in der mechanischen Rauchgasreinigung abgezweigt wird und nach Abscheidung der Feinkorn-Teilchen wieder unter dem Rost oder in den Schlackenkanal zugeführt wird.
- Fig. 4:: einen Längsschnitt durch einen Verbrennungsrost mit anschliessendem Schlacken-Fallschacht, mit einem induzierten Gegen-Abgasstrom, mit Feinkornabscheidung mit dem Rauchgas und Einspeisung unter der Ausglühzone des Rostes und in den Schlackenschacht.

Nach dem erfindungsgemässen Verfahren werden die Feinkornanteile der Schlacke bereits vor dem Eintreten in den Entschlacker durch eine Strömungsklassierung ("Sichtung") entfernt, und die Schlacke wird hernach konventionell durch einen Nass- oder Trockenentschlacker ausgetragen. Der Bereich unmittelbar vor der Schlackenabwurfkante des Verbrennungsrostes wird auch als Ausglühzone bezeichnet. Dort sind die Glühverluste des darauf befindlichen Materials auf weniger als 15% beschränkt, und zu 85% und mehr befindet sich bloss Schlacke in diesem Rostbereich. Die Entstaubung findet entweder in dieser Ausglühzone statt, in dem die im Wesentlichen horizontal über den Rost wandernde Schlacke von unten vom Abgas durchströmt wird, oder aber im Abwurfschacht, der den Rost mit dem Entschlacker verbindet, und welcher Schacht von einem Gasstrom durchströmt wird. Kennzeichnend für das Verfahren ist die Verwendung eines speziell induzierten Gasstroms für die Entstaubung. Dieser Gasstrom kann aus reinem Abgas bestehen, oder auch mit Frischluft angereichert sein. Er wird in einer hinreichenden Stärke im Schlackenschacht oder Verbrennungsraum mittels Gebläsen induziert. Bei einer Durchströmungsgeschwindigkeit von ca. 0.1 m/s bei Schlacke, die eine Dichte von 2.5g/cm³ aufweist, wird ein Trennschnitt von ca. 0.03mm Korngrösse erzielt, und bei einer Durchströmgeschwindigkeit von 10m/s ein Trennschnitt von rund 1 mm Korngrösse. Die Verwendung von Abgas steht im deutlichen Gegensatz zu der oben beschriebenen Entstaubung mittels der durch einen Trockenentschlacker einziehenden "Falschluft", die kein Abgas ist, sondern Umgebungsluft, und die wegen ihres hohen Sauerstoffanteils die Feuerführung im Ofen beeinträchtigt. Unter Abgas wird hier ein Gas verstanden, das weniger als 10% Sauerstoff enthält, vorzugsweise zwischen 6% bis 10%, um die Verbrennungsvorgänge möglichst nicht zu stören. Dieses in der erfindungsgemässen Vorrichtung für die Entstaubung verwendete Abgas wird aus den oberen Regionen des Schlackenschachtes oder aus den Anlagen zur Energiegewinnung und mechanischen Rauchgasreinigung sowie der chemischen Rauchgasreinigung mittels eines oder mehrerer Gebläse abgesaugt und in den Schlacken-Abwurfschacht oder unter den kurz vor der Schlackenabwurfkante befindlichen Teil des Verbrennungsrostes zurückgeführt, sodass eine ausgeglichene Ein- und Ausströmbilanz des zusätzlichen Gases für die Entstaubung erzielt wird und die Stöchiometrie der Feuerführung unbeeinflusst bleibt. Die durch den zirkulierenden Gasstrom mitgerissenen Feinkornanteile der Schlacke werden in der mechanischen Rauchgasreinigung, also dem Filter, zusammen mit der Filterasche abgeschieden. Sie können aber auch separat ausgeschleust werden.

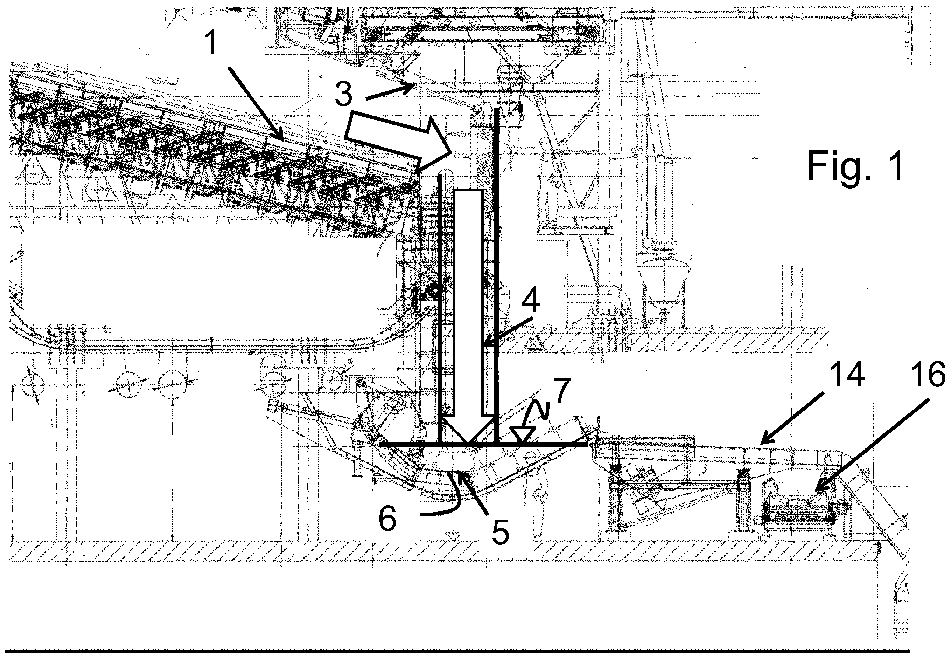

Wie man anhand von Figur 1 sieht, die einen Schnitt durch einen Typ einer konventionellen Müllverbrennungsanlage zeigt, kommt der Müll hier von links auf den Verbrennungsrost 1 und wird darauf auf verschiedenen Zonen vollständig verbrannt und dabei durch die Schür- und Transportbewegungen der einzelnen Rostplatten des Verbrennungsrostes 1 auf dem Bild von links nach rechts gefördert. Oberhalb des Endbereiches des Verbrennungsrostes 1 erkennt man die Kesselwand 3, welche dann über dem Verbrennungsrost 1 vertikal nach oben führt und den einen Teil des Rauchgaskanals der Anlage bildet. Am Ende des Verbrennungsrostes 1 fällt, wie der Pfeil andeutet, die Schlacke, die vom ausgebrannten Müll übrigbleibt, in den Schlackenschacht 4. In diesem Schlackenschacht 4 fällt die Schlacke aufgrund der Schwerkraft längs des vertikalen Pfeils nach unten in den Schlackenfang 5, der bis zur eingezeichneten horizontalen Linie 7 mit Wasser gefüllt ist. Das vermeidet eine Staubentwicklung bei der späteren Förderung der Schlacke und kühlt sie ab. Ein Schlacken-Ausstosser 6 stösst die Schlacke periodisch im Bild von links nach rechts aus dem Schlackenfang 5 auf eine Vibrationsrinne, die die Schlacke vergleichmässigt, sodass dann die feuchte Schlacke schliesslich auf ein Förderband 16 fällt, welches sie zu einem Transportbehälter oder Bunker weiterfördert. Der Schlackenschacht 4 misst hier einige Meter in der Breite, das heisst er ist so breit wie der Verbrennungsrost 1, und seine Tiefe beträgt 5m bis 6m und sein Quermass beträgt hier 1 m. Diese Masse werden an die jeweilige Anlage angepasst und können selbstverständlich variieren. Soweit zeigt die Figur 1 eine konventionelle Anlage.

Das System zur Separierung des Feinkornanteils in der Schlacke basiert nun auf einem durch den Schlacke- bzw. Ascheweg geführten, speziell induzierten Gasstrom. Kurz oberhalb oder im Bereich dieses induzierten Gasstroms, der vorzugsweise aus Abgas besteht, sorgen zusätzliche aktive oder passive Einbauten für ein Aufbrechen, Auflockern oder besseres Verteilen der Schlacke. Der Gasstrom transportiert sodann die feineren Bestandteile aus dem Schlackeweg in einen separaten Weg. Diese partikelbeladene Luft wird über Zyklone, Elektro- und Staubfilter geführt, um die festen Bestandteile, namentlich feinkörnige Mineralfraktionen, Schwermetalle, Eisen-haltige oder nicht Eisen-haltige Metalle und Schwermetall-Salze vom Gasstrom zu trennen. Danach wird der Gasstrom von einem Gebläse angesaugt und wieder in den Schlackeweg geblasen, oder in die Unterwindzone des Verbrennungsrostes 1 geblasen und dort insbesondere unter die vor der Abwurfkante 2 befindliche Schlacken-Ausglühzone. Da gleich viel Gas in diesen mit dem Feuerraum verbundenen Bereich oder direkt unter den Verbrennungsrost 1 geblasen wird, wie gleichzeitig abgesaugt wird, wird der Verbrennungsprozess, die Rauchgasmengen, Emissionen und Temperaturen von diesem System nicht beeinflusst. Wird gezielt ein Luftaustausch in diesem System gewünscht, kann zusätzliche Luft gezielt über ein zusätzliches Gebläse oder eine Falschluftklappe auf der Saugseite zugeführt werden. Damit wird in diesem Spezialfall die Durchströmbilanz zwischen dem Anfang und Ende des Schlackenkanals ausnahmsweise entsprechend verändert. Um das Mitreissen der Partikel des Feinkornanteils beeinflussen zu können, wird der Gasstrom geregelt, etwa über eine Frequenzregelung des Gebläses oder über entsprechende Armaturen. Zudem kann die Eindüsung mittels im Eindüswinkel und in der Eindringtiefe variabler Düsen erfolgen.

Eine typische Anordnung für den Absaug-Kreislauf wird zum Beispiel um den Schlackeschacht 4 installiert. Im Schlackeschacht sind auf der einen Seite die Düsen für die Rückführung angeordnet, auf der gegenüberliegenden Seite der Anschluss für die Absaugung. Die Düsen sind leicht nach oben geneigt, damit die fallenden Partikel abgebremst werden und auf die gegenüberliegende Seite des Schlackenschachtes 4 geblasen werden. Der abgesaugte Gasstrom wird durch einen Zyklon und danach durch einen Elektrofilter geleitet. Weitere Filtervarianten unterschiedlichen Typs können zusätzlich eingebaut sein, zum Beispiel Schlauchfilter. Die abgetrennten Feststoffe werden zum Beispiel über Zellradschleusen aus dem Filter gefördert und gesammelt. Der gereinigte Gasstrom wird über ein oder mehrere Ventilator-Gebläse zurück in den Schacht oder in die Unterwindzone des Verbrennungsrostes 1 geblasen. Eine solche Anordnung könnte aber auch direkt am Ende des Rostes installiert sein.

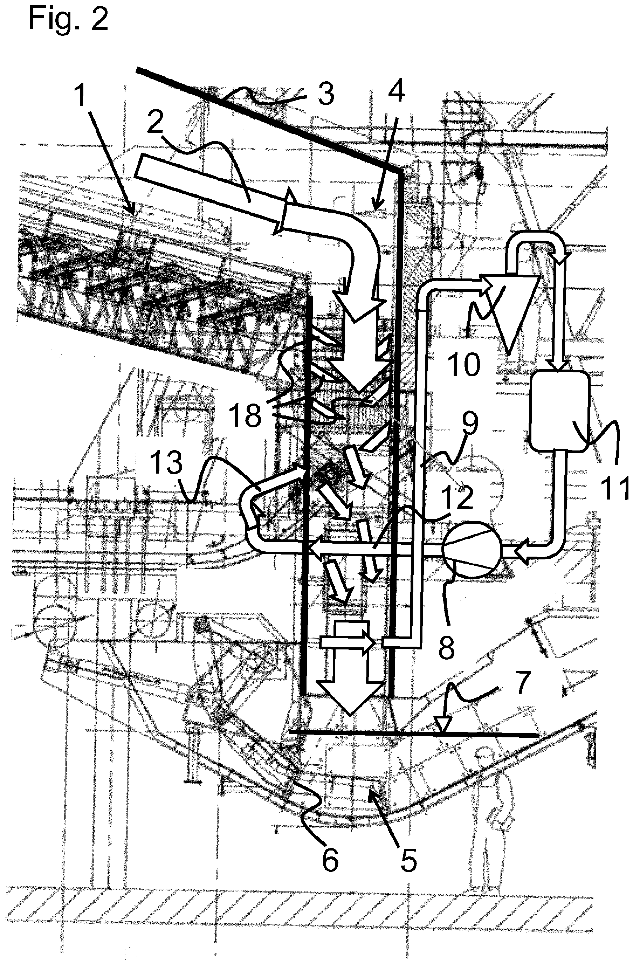

Die Figur 2 zeigt eine Anlage mit der erfindungsgemässen Vorrichtung zum Staubabscheiden. Gezeigt ist ein Ausschnitt aus dem Längsschnitt von Figur 1, nämlich der Endbereich des Verbrennungsrostes 1 sowie der Schlacken-Fallschacht 4 mit Schlackenfang 5, jedoch mit einer installierten Staubpartikel-Abscheide-Vorrichtung um den Schlacken-Fallschacht 4 angeordnet. Diese wird von mindestens einem Rohrkreislauf gebildet. Auf der im Bild rechten Seite des Schlackenschachtes 4 führt hier ein Rohr 9 aus dem Innern des Schlackenschachtes 4 von seinem unteren Bereich, wo der Staubanteil am grössten ist, nach aussen. Es führt hier aussen an der Wand des Schlackenschachtes 4 nach oben und dann seitlich in einen Zyklon 10 und hernach von dessen unterer Spitze im Innern nach oben aus ihm heraus und dann nach unten in einen Elektrofilter 11. Nach diesem führt der Absaug-Kreislauf durch ein Ventilatorgebläse 8. Mittels dieses Ventilatorgebläses 8 lässt sich am Einlass des Rohres 9 ein Unterdruck erzeugen, sodass das umliegende mit Staubpartikel befrachtete Gas abgesaugt wird und durch eine oder mehrere Abscheidevorrichtungen 10,11 strömt. Oberhalb des Absaugbereichs sind im Schlackenschacht 4 Prallbleche 15 eingebaut, die nach unten geneigt sind. Beim Betrieb des Ventilator-Gebläses 8 wird der Luftstrom im Schlackenschacht 4 wie mit den Pfeilen eingezeichnet abgelenkt und zum grössten Teil abgesaugt, wie mit dem horizontalen Pfeil eingezeichnet. Die Leistung des Ventilator-Gebläses 8 kann über eine Frequenzregelung reguliert werden, oder der Gasstrom in der Absaugleitung kann mittels Ventilen gedrosselt werden. Einige Gasteilchen können dabei ohne weiteres auch mehrmals den Absaugkreislauf durchlaufen.

Eine erste Abscheidevorrichtung 11 ist hier in Form eines Zyklons 10 eingezeichnet. Wegen der im Vergleich zu anderen Verfahren nur massigen Filterleistung bei feinsten Partikeln wird er oft als Teil einer Filterkette eingesetzt, um die schweren Partikel abzuscheiden.

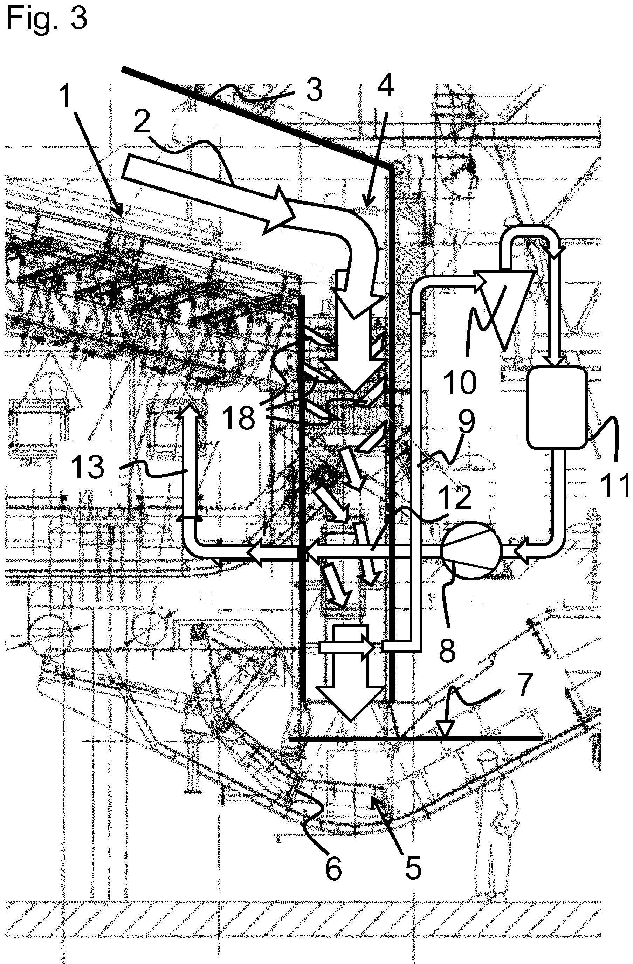

In einem nachgeschalteten Elektrofilter 11 werden nach bekannter Manier wie auch für die Reinigung von Rauchgasen praktiziert weitere Partikel abgeschieden, nämlich die Feinstpartikel. Diese Filterrückstände (Flugasche) werden hernach mittels weiterer Verfahren behandelt, um die wertvollen Inhaltsstoffe vom Rest zu trennen. Fast 100% der im Gas befindlichen Staubmasse kann durch Elektrofilter abgeschieden werden. Der Elektrofilter hat nicht für alle Korngrößen des Staubes den gleichen Abscheidegrad. Insbesondere Stäube mit kleinem Korndurchmesser (Feinstaub), in denen sich bevorzugt Schwermetalle und andere Schadstoffe anreichern, werden nur zu ca. 95% zurückgehalten. Erfindungsgemäss wird das entlastete Gas über die Rückführleitung 12 durch ein Ventilatorgebläse 8 mit Frequenzregelung geführt, und dann durch das Zufuhrrohr 13 mit leicht nach oben gerichteter Düse wieder in den Schlackenkanal 4 zurückgeführt. Die Zurückführung kann aber auch direkt in den Bereich unterhalb des Verbrennungsrostes 1 erfolgen, vorzugsweise in die Ausglühzone, wie das in Figur 3 gezeigt ist. Die zurückgeführte Luft wird mit entsprechend hohem Impuls in den Schlackeschacht eingeblasen, um die Feinfraktion möglichst effizient von der restlichen Schlacke zu trennen. Wenn der Ansaugstutzen des Rohres 9 oder ein zusätzlicher Ansaugstutzen alternativ etwa gegenüber den Einblasdüsen angeordnet ist, so wird das staubbefrachtete Gas auch direkt zu dieser Absaugöffnung geblasen.

Damit ist der Betrieb dieser Partikelabscheidung aus dem Staub im Schlackenkanal 4 Druck-neutral und Luftmengen-neutral. Genau soviel Abgas wie abgesaugt wird, wird pro Zeiteinheit in den Schlackenkanal 4 eingespeist. Es gibt folglich keine Veränderungen des Druckes ober- und unterhalb der Absaugung und Einspeisung. Es ist klar, dass mehrere Absaug- und Einspeisrohre, sowie auch mehrere Arten von Filtern kombiniert werden können. Diese können parallel zueinander angeordnet sein, oder aber auch wie hier gezeigt in Serie angeordnet sein.

In Figur 4 ist eine Alternative gezeigt, bei welcher der Gasstrom zum Teil unterhalb der Endkante des Verbrennungsrostes 1 in den Schlackenschacht 4 eingeblasen wird, das heisst also unter seine Ausglühzone, und zum Teil in den Schlackenschacht 4. Aufgrund des oberhalb des Rostes 1 wirkenden tieferen Druckes strömt das Gas wie mit den Pfeilen eingezeichnet in den Rauchgaskanal auf und nimmt die Feinfraktion in der Schlacke mit. Im Rauchgaskanal folgen zunächst die Anlagen für die Energiegewinnung 14, das heisst für den Wärmeabzug aus dem Rauchgas, dann für die mechanische Rauchgasreinigung 19 und für die chemische Rauchgasreinigung 16. In der mechanischen Rauchgasreinigung 19 vermögen die Feinpartikel noch zu schlüpfen und werden dann mit dem dort im gleichen Gasvolumen abgesaugten wie im Schlackenschacht zugeführten Gasvolumen durch die Absaugleitung 9 und dann durch die Rückführleitung 17 nach Passieren der Feinpartikel-Abscheideeinrichtungen, nämlich hier des Zyklons 10 und hernach des Elektrofilters 11 dem Innern des Schlackenkanals 4 über das Einspeiserohr 12 oder in die Unterwindzone des Verbrennungsostes 1 über das Zufuhrrohr 13 wieder zugeführt.

Vorteilhaft wird man das Ventilatorgebläse 8 wie gezeigt hinter den Filtereinrichtungen 10,11 anordnen, damit es nicht mit den im abgesaugten Gas mitgeführten Partikeln belastet ist, die sonst abrasiv wirken. Vorteilhaft wird man zunächst mit einem Zyklon 10 die schweren Partikel abscheiden, und hernach das Gas durch einen Elektrofilter 11 für die Abscheidung der Feinstpartikel führen. Es können auch mehrere Absaug-Kreisläufe installiert werden, die auf verschiedene Staubpartikel-Qualitäten ausgelegt sind. Die abgeschiedenen Partikel, die teilweise wertvolle Stoffe enthalten, können dann mit herkömmlichen Methoden weiter aufgearbeitet werden, um die wertvollen Stoffe daraus zu lösen und einer Wiederverwertung zuzuführen. Die durch das Verfahren weitgehend von den in den Feinkornfraktionen angereicherten wasserlöslichen Schwermetall-Salzen befreite Schlacke eignet sich aufgrund ihrer guten Qualität hervorragend zur Verwertung im Bauwesen, namentlich für den Strassenbau. Ein weiterer Vorteil der Separierung dieses Feinanteils liegt im staubfreien Transport der von diesem Feinanteil befreiten Asche und Schlacke. Insbesondere im Falle eines trockenen Austragssystem - die Trockenentschlackung wird in der Branche immer mehr zum Thema - neigt die unbehandelte Schlacke zu einer hohen Staubfreisetzung. Die hier aufgezeigte vorgängige Abtrennung der Feinfraktion hat in diesem Fall vor allem den Vorteil, dass die normal ausgetragene Schlacke nunmehr ohne den bereits abgetrennten Feinanteil deutlich weniger staubt.

## Patentansprüche

1. Verfahren zur Abscheidung von Feinkornanteilen aus der Schlacke einer Müllverbrennungsanlage, bei welchem ein separat induzierter Gasstrom aus entweder Abgas, abgesaugt aus den oberen Regionen des Schlackenkanals (4) oder aus einer Rauchgasreinigungs-Einrichtung (19) und/oder aus Frischluft durch die entweder in der Ausglühzone des Rostes liegende oder im freien Fall im Schlackenschacht befindliche Schlacke geführt wird, sodass in der Schlacke befindliche Feinkornanteile von diesem Gasstrom mitgenommen und mit ihm durch einen oder mehrere Abscheider (10,11) geführt werden, und dass darin mittels chemischer, mechanischer oder elektrischer Behandlung die Feinkornanteile vom Gasstrom abgeschieden werden, und dass dieser separat induzierte, von den Feinkornanteilen befreite Gasstrom hernach wieder in den Schlackenschacht (4) oder in die Ausglühzone des Verbrennungsrostes (1) eingeblasen wird.

2. Verfahren nach Anspruch 1, ***dadurch gekennzeichnet,* dass** der Gasstrom ein reiner Abgasstrom ist.

3. Verfahren nach Anspruch 1, ***dadurch gekennzeichnet,* dass** der Gasstrom ein Gemisch aus Abgasen und Frischluft ist.

4. Verfahren nach einem der vorangehenden Ansprüche, ***dadurch gekennzeichnet,* dass** der Abgasstrom weniger als 10% Sauerstoff enthält, vorzugsweise 6% bis 10%.

5. Verfahren nach einem der vorangehenden Ansprüche, ***dadurch gekennzeichnet,* dass** der Gasstrom mit einer Quer- oder Gegenstromkomponente durch den Schlackenschacht geführt wird.

6. Verfahren nach einem der Ansprüche 1 bis 4, ***dadurch gekennzeichnet,* dass** der Gasstrom aus einer Rauchgasreinigungs-Einrichtung (19) abgesaugt wird und nach Abscheidung der Feinkornfraktion unter der Ausglühzone des Verbrennungsrostes wieder eingeblasen wird.

7. Verfahren nach einem der Ansprüche 1 bis 4, ***dadurch gekennzeichnet,* dass** der Gasstrom aus einer Rauchgasreinigungs-Einrichtung (19) abgesaugt und nach Abscheidung der Feinkornfraktion in den Schlackenschacht (4) eingeblasen wird.

8. Verfahren nach einem der vorangehenden Ansprüche, ***dadurch gekennzeichnet,* dass** der Gasstrom mit einer Strömungsgeschwindigkeit zwischen 0.1 m/s und 10 m/s mittels einem oder mehreren Gebläsen (8) induziert wird.

9. Müllverbrennungsanlage mit Vorrichtung zur Abscheidung von Feinkornanteilen aus der Schlacke an dieser Müllverbrennungsanlage, wobei die Müllverbrennungsanlage einen Verbrennungsrost (1) mit einem an diesen anschliessendem Schlackenschacht (4) für die Schlacke aufweist, sowie einen Rauchgaskanal mit Rauchgasreinigungs-Einrichtungen (18,19,20) einschliesst, wobei der Schlackenschacht (4) zu einem Trocken- oder Nass-Austrag der Schlacke führen kann, ***dadurch gekennzeichnet,* dass** die Vorrichtung ein Absaugrohr (9), ein Zuführrohr (12,13), Abscheidevorrichtungen und ein Gebläse einschliesst, wobei das Absaugrohr (9) aus dem Schlackenschacht (4) oder der mechanischen Rauchgasreinigungs-Einrichtung (15) und hernach durch die Abscheidevorrichtungen (10,11) und schliesslich durch mindestens ein Gebläse (8) führt, wonach es über das Zuführrohr (12) in den Schlackenschacht (4) oder unter die Ausglühzone des Verbrennungsrostes (1) mündet.

10. Müllverbrennungsanlage mit Vorrichtung zur Abscheidung von Feinkornanteilen aus der Schlacke an dieser Müllverbrennungsanlage nach Anspruch 9, **dadurch gekennzeichnet, dass** die Abscheidevorrichtungen (10,11) einen Zyklon (10) und/oder einen Elektrofilter (11) umfassen, und mit dem Gebläse (8) ein Abgasstrom mit wenigstens einer Geschwindigkeit von 0.1m/s im Mündungsbereich des Zufuhrrohres (12,13) induzierbar ist.

## Claims

1. A method for the separation of fine-grained fractions from the cinder of a waste incineration plant, by which a separately induced gas flow from exhaust gas, sucked from the upper regions of the cinder channel (4) or from fresh air by which the cinder that is either available in the annealing zone of the grate or found to fall under gravity, is conducted, so that the fine-grained fractions found in the cinder are carried along by this gas flow and conducted by it through one or more separators (10, 11), and that the fine-grained fractions are separated from the gas flow by means of chemical, mechanical or electrical treatment, and that this gas flow that is separately induced and freed from the fine-grained fractions is blown into the cinder shaft (4) or in the annealing zone of the combustion grate (1).

2. A method according to claim 1, ***characterized in that*** the gas flow is a pure exhaust gas flow.

3. A method according to claim 1, ***characterized in that*** the gas flow is a mixture of exhaust gases and fresh air.

4. A method according to one of the previous claims, ***characterized in that*** the exhaust gas flow contains less than 10% oxygen, preferably 6% to 10%.

5. A method according to one of the previous claims, ***characterized in that*** the gas flow is conducted with a transverse or counterflow component through the cinder shaft.

6. A method according to one of the claims 1 to 4, ***characterized in that*** the gas flow is sucked from a flue gas purification device (19) and blown back under the annealing zone of the combustion grate after separation of the fine-grained fraction.

7. A method according to one of the claims 1 to 4, ***characterized in that*** the gas flow is sucked from a flue gas purification device (19) and blown into the cinder shaft (4) after separation of the fine-grained fraction.

8. A method according to one of the previous claims, ***characterized in that*** the gas flow is induced with a velocity between 0.1 m/s and 10 m/s, using one or more blowers (8).

9. A device for the separation of fine-grained fractions from the cinder of a waste incineration plant, the waste incineration plant having a combustion grate (1) with connected cinder shaft (4) for the cinder, and a flue gas channel with flue gas purification devices (18, 19, 20), whereby the cinder shaft (4) may lead to a dry or wet discharge of the cinder, ***characterized in that*** the device includes a suction pipe (9) and a feed pipe (12, 13) and a blower, whereby the suction pipe (9) comes from the cinder shaft (4) or from the mechanical flue gas purification device (15) and afterwards goes through separating devices (10, 11) and finally through at least one blower (8), after which through the feed pipe (12) it enters the cinder shaft (4), or under the annealing zone of the combustion grate (1).

10. A device for the separation of fine-grained fractions from the cinder of a waste incineration plant according to claim 9, ***characterized in that*** the separating devices (10, 11) include a cyclone (10) and/or an electrostatic filter (11), and a blower (8) by which the exhaust gas flow can be induced at least with a speed of 0.1 m/s in the entry zone of the feed pipe (12, 13).

## Revendications

1. Procédé pour séparer des fractions des grains fins des cendres d'une installation d'incinération des déchets, dans lequel procédé un flux de gaz, induit séparément, composé soit de gaz ou de fumée, est aspiré des zones supérieurs du canal des cendres (4) ou de l'installation d'épuration des gaz de fumée (19), et/ou d'air frais, par lequel procédé les cendres, qui sont disponibles dans la zone de recuit de la grille ou qui tombent sous l'effet de la gravité, sont guidés, de manière à ce que les fractions de grains fins se trouvant dans les cendres sont amenés par ce flux de gaz et conduits avec lui à travers d'un ou plusieurs séparateurs (10,11) et en ce que lesdites fractions sont y séparées du flux de gaz par un traitement chimique, mécanique ou électrique et en ce que ce flux de gaz qui est induit séparément et libéré de ses fractions de grains fins, est soufflé ensuite dans le canal de cendres (4) ou dans la zone de recuit de la grille de recuit (1)

2. Procédé selon la revendication 1, **caractérisé en ce que** le flux e gaz est un flux de gaz de fumées pur.

3. Procédé selon la revendication 1, **caractérisé en ce que** le flux de gaz est un mélange de gaz de fumées et d'air frais.

4. Procédé selon une des revendications précédentes, **caractérisé en ce que** le flux de gaz de fumées comporte moins que 10% d'oxygène, de préférence entre 6% et 10%.

5. Procédé selon une des revendications précédentes, **caractérisé en ce que** le flux de gaz est conduit à travers le canal des cendres avec une composante transversale ou une composante du contre-courant.

6. Procédé selon une des revendications 1 à 4, **caractérisé en ce que** le flux de gaz est aspiré d'une installation d'épuration de gaz de fumées (19) et est soufflé à nouveau après la séparation de la fraction des grains fins sous la zone de recuit de la grille de combustion.

7. Procédé selon une des revendications 1 à 4, **caractérisé en ce que** le flux de gaz est aspiré d'une installation d'épuration de gaz de fumées (19) et est soufflé à nouveau après la séparation de la fraction des grains fins dans le canal des cendres.

8. Procédé selon une des revendications précédentes, **caractérisé en ce que** le flux de gaz est induit au moyen d'un ou deux souffleurs avec une vitesse de flux entre 0.1 m/s uns 10 m/s.

9. Installation d'incinération de déchets avec un dispositif pour séparer les fractions des grains fins des cendres dans cette installation d'incinération de déchets, où cette installation d'incinération de déchets comporte une grille de combustion (1) suivie par un canal de cendres (4) destiné au cendres, ainsi qu'un canal de gaz de fumées avec des installations d'épuration de gaz de fumées (18, 19, 20), où le canal des cendres (4) peut conduire à une extraction sèche ou humide, **caractérisé en ce que** le dispositif comporte un conduit d'aspiration (9), un conduit d'alimentation (12,13), des installations de séparation et un souffleur, où le conduit d'aspiration (9) est conduit à partir du canal des cendres (4) ou de l'installation d'épuration des gaz de fumées mécanique (15) et ensuite à travers les dispositifs de séparation (10,11) et ensuite à travers d'au moins un souffleur (8), à la suite de quoi le conduit d'aspiration débouche à travers le conduit d'aspiration (12) sur le canal des cendres (4) ou sous la zone de recuit de la grille de combustion.

10. Installation d'incinération de déchets avec un dispositif pour séparer les fractions des grains fins des cendres dans cette installation d'incinération de déchets selon la revendication 9, **caractérisée en ce que** les dispositifs de séparations (10,11) comportent un cyclone (10) et/où un électrofiltre (11), et **en ce qu'**on peut induire avec le souffleur (8) un flux de gaz de fumée avec une vitesse d'au moins 0,1 m/s dans la zone débouchante du conduit d'alimentation (12,13).
